# EUROPÄISCHE PATENTSCHRIFT

(11) **EP 2 508 457 B1**
(45) Veröffentlichungstag und Bekanntmachung des Hinweises auf die Patenterteilung: **01.02.2017**
(21) Anmeldenummer: 12001853.6
(22) Anmeldetag: 20.03.2012
(51) Int. Cl.: B65H 51/06, B65H 51/32, D04B 15/48, B29C 45/14, H02K 21/24, H02K 5/128

(54) **Fadenlieferwerk**
Thread supplier
Système d'appel de fil

(30) Priorität: 04.04.2011 DE 102011015880
(43) Veröffentlichungstag der Anmeldung: 10.10.2012
(73) Patentinhaber: Kern Antriebstechnik GmbH, 88046 Friedrichshafen (DE)
(72) Erfinder: Bäumer, Jürgen, 88677 Markdorf (DE); Schönherr, Peter, 88214 Ravensburg (DE)
(74) Vertreter: Stadler, Franz

(56) Entgegenhaltungen:
- DE-A1- 4 206 607
- DE-B- 1 147 705
- FR-A1- 2 870 837
- GB-A- 2 158 107
- JP-A- S 561 754
- JP-A- 2000 272 824
- JP-A- 2008 236 824
- US-A- 6 002 185
- US-A1- 2001 033 111
- US-A1- 2010 287 994

## Beschreibung

Die vorliegende Erfindung betrifft ein Fadenlieferwerk gemäß dem Oberbegriff des Anspruches 1 und ein Verfahren zur Herstellung eines Fadenlieferwerkes gemäß dem Oberbegriff des Anspruches 12.

Textilmaschinen, z. B. Strick- oder Webmaschinen, dienen dazu, mit einem Faden beispielsweise einen Stoff herzustellen. Mit Webmaschinen können auch in Autoreifen zu integrierende Stoffe bzw. Webprodukte hergestellt werden. Die Textilmaschine benötigt zum Weben einen Faden, der von einer Rolle abzuwickeln ist. Zur Zuführung des Fadens von der Rolle zu der Textilmaschine wird ein sogenanntes Fadenlieferwerk bzw. eine Fadenliefervorrichtung benötigt.

Das Fadenlieferwerk rollt den Faden von der Rolle in einer entsprechenden ausreichenden Geschwindigkeit ab, so dass der Textilmaschine eine ausreichende Fadenlänge pro Zeiteinheit zur Verfügung steht. Fadenlieferwerke sind z. B. mit einem Schrittmotor als Elektromotor versehen zum Antreiben einer Lieferrolle. Ein Schrittmotor führt keine kontinuierliche Rotationsbewegung am Rotor aus, sondern die Rotationsbewegung des Rotors erfolgt in einzelnen Schritten als kurzzeitige Rotationsbewegung ähnlich der Bewegung eines Sekundenzeigers an einer Uhr.

Die DE 1 585 175 zeigt eine Fadenliefervorrichtung an Rundstrickmaschinen, in der eine Walze bei schlupfloser Fadenlieferung die Gegenwalze eines mit Fadengeschwindigkeit umlaufenden, mit dieser in Reibverbindung stehenden Fadenlieferelements bildet und bei Lieferung mit Schlupf als Fadenlieferwalze dient, wobei zum Übergang von schlupfloser Fadenlieferung auf Fadenlieferung mit Schlupf die Reibverbindung zwischen der Walze und dem mit Fadengeschwindigkeit umlaufenden Fadenlieferelement lösbar ist.

Aus der DE 1 147 705 ist eine Fadenliefervorrichtung für Strick- und Wirkmaschinen bekannt, bei der das vom Faden umschlungene Förderelement eine spiegelglatte Oberfläche aufweist und mit einer konstanten Umfangsgeschwindigkeit angetrieben wird, die ein Vielfaches der höchstens vorkommenden Fadengeschwindigkeit beträgt, wobei das Förderelement ein Zylinder ist, der der Rotor eines Elektromotors ist.

Die DE 42 06 607 A1 zeigt ein Fadenliefergerät als Fadenzubringer für Textilmaschinen mit einer Fadenbremse für den von einer Spule durch einen Antriebsmotor abgezogenen Faden, der in mehrere nebeneinander liegenden Windungen auf einer Speichertrommel abläuft, wobei die Drehzahl des Antriebsmotors und damit der Fadenvorschub mittels eines Fadenspannungssensors am Faden regelbar ist, wobei dem Fadenliefiergerät ein oder zwei Fäden zuführbar sind, die direkt oder über eine Fadenbremse einer Speichertrommel zugeführt werden, dass die Speichertrommeln zur Speicherung einer gewissen erforderlichen Fadenmenge einstückig mit einem Rotor des Antriebsmotors ausgebildet ist und X-förmige angeordnete Stahldrähte zur Bildung eines Drahtgitters am Umfang der Speichertrommel aufweist.

Die JP 2000 272824 A zeigt eine Fadenzuführrolle für eine Fadenverarbeitungsmaschine. An einer Außenseite eines zylindrischen Befestigungsteiles ist ein Stator befestigt und an einer Innenseite des zylindrischen Befestigungsteiles ist mittels Lagern eine Welle gelagert.

Aus der FR 2 870 837 A1 ist ein Reibungsantrieb mit einer Spur auf der Außenfläche aus einem zylindrischen Hohlkörper bekannt. Der Hohlkörper bildet den Rotor eines Motors mit Permanentmagneten, wobei sich die Magnete im Inneren des Hohlkörpers befinden gegenüberliegend zu einem Stator.

Die JP 2008 236824 A zeigt ein Verfahren zur Herstellung eines Stators.

Aus der JP S56 1754 A ist ein Verfahren und eine Vorrichtung zur Herstellung einer Drahtspule bekannt.

Aus der US 6 002 185 A ist ein Elektromotor mit einem Stator und einem Rotor bekannt. Der Rotor ist innerhalb des Stators angeordnet und ein Hauptkörper aus einen Harz deckt den Stator ab.

Die US 2001/033111 A zeigt einen Elektromotor mit einer Rotoranordnung und einer Statoranordnung. Die Rotoranordnung umfasst einen Rotor mit einer Vielzahl von Permanentmagneten, eine Rotorwelle und die Statoranordnung umfasst eine Vielzahl von Spulen. Eine Kontrolleinrichtung ist an einem mit Spritzgießen hergestellten Gehäuse angeordnet. Die Kontrolleinrichtung wird nach dem Spritzgießen des Gehäuses an dem Gehäuse befestigt, so dass die Kontrolleinrichtung nicht von den beim Spritzgießen auftretenden hohen Temperaturen beschädigt werden kann. Die Aufgabe der vorliegenden Erfindung besteht deshalb darin, ein Fadenlieferwerk und ein Verfahren zur Herstellung eines Fadenlieferwerkes zur Verfügung zu stellen, das preiswert in der Herstellung ist, zuverlässig im Betrieb arbeitet und einen kompakten Aufbau aufweist.

Diese Aufgabe wird gelöst mit einem Fadenlieferwerk als Fadenzubringer für Textilmaschinen, z. B. Strick- oder Webmaschinen, umfassend eine Lieferrolle zum Fördern des Fadens mit einer radialen Außenseite zur Auflage des Fadens, einen Elektromotor mit einem Stator und einem Rotor, so dass mittels einer Rotationsbewegung des Rotors aufgrund einer mechanischen Verbindung zwischen dem Rotor und der Lieferrolle die Lieferrolle in eine Rotationsbewegung bringbar ist, eine Lagerung für die Lieferrolle und den Rotor, wobei der Stator fluiddicht von einem Kunststoffstatorgehäuse eingeschlossen ist und sämtliche Statorkomponenten, abgesehen von den elektrischen Kontaktelementen, vollständig und fluiddicht vom Kunststoff des Kunststoffstatorgehäuses eingeschlossen, insbesondere umspritzt, sind. Vorzugsweise ist das Fadenlieferwerk ohne Fadenbremse ausgebildet, wobei der Elektromotor ein elektronisch kommutierter Gleichstromelektromotor ist und/oder der Rotor von der Lieferrolle gebildet ist und/oder der Stator fluiddicht von einem Kunststoffstatorgehäuse umspritzt ist und/oder der Rotor, insbesondere fluiddicht, von einem Kunststoffrollenbauteil eingeschlossen, insbesondere umspritzt, ist und/oder die Drehzahl der Lieferrolle steuerbar und/oder regelbar ist mittels einer Steuerung und/oder Regelung der Drehzahl des Rotors und/oder das Fadenlieferwerk nur eine Lagerung, insbesondere Gleitlagerung, für die Lieferrolle und den Rotor umfasst. Eingeschlossen bedeutet insbesondere umhüllt oder umgeben. Fluiddicht bedeutet insbesondere auch staubdicht.

Das Fadenlieferwerk ist damit im Aufbau kompakt, im Betrieb zuverlässig und ist in der Herstellung preiswert. Dadurch kann es als Verschleißteil mit einem geringen technischen Aufwand und unter geringen Kosten häufig ausgetauscht werden. Die fluiddichte, insbesondere flüssigkeitsdichte, Umspritzung des Stators mit einem, insbesondere nur einem, Kunststoffstatorgehäuse ermöglicht es, dass das Fadenlieferwerk gegenüber Feuchtigkeit im Wesentlichen nicht anfällig ist und dadurch besonders zuverlässig im Betrieb arbeitet. Die Verwendung nur eines Kunststoffstatorgehäuses, das preiswert mittels Kunststoff im Spritzgießverfahren mit nur einem Werkzeug bzw. Spritzgusswerkzeug hergestellt werden kann, ermöglicht es nicht nur den Stator flüssigkeitsdicht zu umschließen, sondern der Stator und damit der Elektromotor ist damit besonders preiswert in der Herstellung. Die Fadenbremse bringt auf den Faden, vorzugsweise vor der Umwicklung um die Lieferrolle, eine Bremskraft, insbesondere als Reibkraft, auf.

Insbesondere ist der Rotor von der Lieferrolle gebildet, indem in die Lieferrolle Magnete, insbesondere Permanentmagnete, integriert sind. Das Fadenlieferwerk benötigt somit nicht zwei gesonderte Bauteile für den Rotor und die Lieferrolle, sondern die Lieferrolle bildet auch den Rotor und dies in besonders einfacher Weise, indem die Magnete, insbesondere Permanentmagnete, in die Lieferrolle integriert sind.

In einer weiteren Ausgestaltung umfasst die Lieferrolle ein, insbesondere nur ein, Kunststoffrollenbauteil aus Kunststoff und vorzugsweise sind in dem Kunststoffrollenbauteil die Magnete eingeschlossen bzw. integriert und vorzugsweise mechanisch befestigt angeordnet und/oder sämtliche Statorkomponenten, abgesehen von den elektrischen Kontaktelementen, sind vollständig und filuiddicht, vom Kunststoff des Kunststoffstatorgehäuses eingeschlossen, insbesondere umspritzt, und/oder die Rotorkomponenten, insbesondere sämtliche Rotorkomponenten, vorzugsweise abgesehen von den Magneten, insbesondere Permanentmagneten, sind vorzugsweise vollständig und vorzugsweise fluiddicht, vom Kunststoff des Kunststoffrollenbauteiles eingeschlossen, insbesondere umspritzt. Das Kunststoffrollenbauteil ist besonders einfach mittels Spritzgießen mit Kunststoff, insbesondere thermoplastischen Kunststoff, herzustellen und der Magnetträger braucht hierbei nur in das Spritzgusswerkzeug eingelegt zu werden und kann mit umspritzt werden und die Magnete, insbesondere Permanentmagnete, werden nach dem Spritzgießen an dem Kunststoffrollenbauteil befestigt , so dass dadurch die Lieferrolle und auch der Rotor besonders preiswert hergestellt werden können. Die Statorkomponenten sind beispielsweise die Spulen bzw. Elektromagnete, der Spulenträger, die Eisenkernstifte, der Rückschlussring, die Leiterplatine und die elektrischen Kontaktelemente. Die Rotorkomponenten sind vorzugsweise die Permanentmagnete und der Magnetträger.

In einer ergänzenden Ausführungsform ist die Lagerung, insbesondere nur eine Lagerung, an dem Kunststoffstatorgehäuse und/oder dem Kunststoffrollenbauteil ausgebildet. Der Rotor und die Lieferrolle sind eine gemeinsame Baueinheit, so dass nur eine Lagerung sowohl für den Rotor als auch für die Lieferrolle erforderlich ist.

Vorzugsweise ist die Lagerung eine Gleitlagerung und umfasst einen Lagerstutzen und eine Lagerbohrung und der Lagerstutzen ist in der Lagerbohrung angeordnet.

In einer Variante ist der Lagerstutzen, insbesondere einteilig, an dem Kunststoffstatorgehäuse und die Lagerbohrung an der Lieferrolle, insbesondere an dem Kunststoffrollenbauteil aus Kunststoff, ausgebildet oder der Lagerstutzen, insbesondere einteilig, ist an der Lieferrolle, insbesondere an dem Kunststoffrollenbauteil aus Kunststoff, und die Lagerbohrung an dem Kunststoffstatorgehäuse, ausgebildet. Der Lagerstutzen und die Lagerbohrung kann besonders einfach einteilig beim Spritzgießen des Kunststoffstatorgehäuses und/oder des Kunststoffrollenbauteils mithergestellt werden, so dass dadurch für die Herstellung der Lagerung, insbesondere Gleitlagerung, nur sehr geringe Kosten anfallen.

Zweckmäßig ist an dem Lagerstutzen und/oder an der Lagerbohrung eine Lagerhülse angeordnet und die Lagerhülse besteht wenigstens teilweise, insbesondere vollständig, aus einem anderen Material, z. B. PTFE, POM, Rotguss, Stahl oder Aluminium, als der Lagerstutzen und/oder das die Lagerbohrung begrenzende Material. Die Lagerhülse ermöglicht somit eine besonders gute und dauerhafte Ausbildung der Gleitlagerung zwischen dem Lagerstutzen und der Lagerbohrung Dabei kann die Lagerhülse entweder als gesondertes Bauteil in das Spritzgusswerkzeug zur Herstellung des Kunststoffstatorgehäuses und/oder des Kunststoffrollenbauteils eingelegt werden oder die Lagerhülse wird in einem Zweikomponentenspritzgussverfahren hergestellt.

In einer weiteren Ausführungsform ist der Elektromotor bürstenlos ausgebildet und/oder der Elektromotor ist ein mehrphasiger elektronisch kommutierter Gleichstromelektromotor und/oder der Stator umfasst Elektromagnete mit Spulen und vorzugsweise sind innerhalb der Spulen Eisenkernstifte angeordnet und/oder der Stator umfasst einen Rückschlussring aus Eisen der in magnetisch leitender Verbindung mit den Eisenkernstiften steht.

Insbesondere umfasst der Elektromotor eine Leiterplatine zur Bestromung der Elektromagnete und vorzugsweise ist eine von der Leiterplatine aufgespannte fiktive Ebene im Wesentlichen senkrecht ausgerichtet zu der Rotationsachse des Rotors und vorzugsweise umfasst die Leiterplatine elektrische Kontaktelemente zur Bestromung der Elektromagnete mit durch die elektrischen Kontaktelemente geleiteten Strom und vorzugsweise sind die elektrischen Kontaktelemente mit Leiterbahnen der Leiterplatine verbunden mit einer Kontaktverbindung, z. B. mit einer Lötverbindung oder einem Schneid-Klemmkontakt, und/oder das Fadenlieferwerk umfasst eine Leistungselektronik zur Steuerung und/oder Regelung der Drehzahl des Rotors und/oder der elektrischen Leistung des Elektromotors und vorzugsweise ist mit der Leistungselektronik von dem Stator auf den Rotor ein magnetisches Bremsdrehmoment aufbringbar mittels einer entsprechenden Bestromung der Elektromagnete.

Die Leiterplatine ist als ein plattenförmiges Bauteil ausgebildet und die Leiterplatine spannt die fiktive Ebene auf. Diese von der Leiterplatine aufgespannte fiktive Ebene ist im Wesentlichen senkrecht zu der Rotationsachse des Rotors und/oder der Lieferrolle, d. h. ist mit einer Abweichung von weniger als 30°, 20°, 10° oder 5° senkrecht zu der Rotationsachse des Rotors und/oder der Lieferrolle ausgerichtet. Die Leiterplatine, beispielsweise eine Kunststoffplatte mit darauf angeordneten elektrisch leitenden Leiterbahnen, ist besonders preiswert in der Herstellung, so dass bei der Herstellung des Fadenlieferwerkes keine aufwendige Verdrahtung der Spulen als Elektromagneten des Elektromotors erforderlich ist. Mit Hilfe mit der Leiterplatine verbundenen elektrischen Kontaktelemente können die Spulen des Elektromotors abwechselnd bestromt werden. Beispielsweise umfasst der Elektromotor sechs Spulen von denen jeweils zwei gegenüberliegende Spulen bestromt werden. Ein Rückschlussring, der auch als Spulenträger dient, verstärkt dabei das von den Spulen als Elektromagnete aufgebaute Magnetfeld zur Bewegung des Rotors mit den Permanentmagneten. Beim Fördern bzw. Liefern eines Fadens zu der Textilmaschine kann es auch erforderlich sein, dass die pro Zeiteinheit geförderte Fadenlänge reduziert wird aufgrund eines Abschaltens der Textilmaschine. Hier ist es erforderlich, die Winkelgeschwindigkeit des Rotors als auch der Lieferrolle schnell zu reduzieren. Dabei ist es möglich, insbesondere mit der Leistungselektronik, die Elektromagnete dahingehend zu bestromen, dass von diesen ein magnetisches Bremsmoment auf den Rotor aufgebracht wird, so dass die Winkelgeschwindigkeit des Rotors und damit der Lieferrolle schnell entsprechend dem Bedarf des Fadens an der Textilmaschine reduziert werden kann.

In eine weiteren Ausgestaltung ist der Elektromotor als ein Scheibenläuferelektromotor ausgebildet und/oder an dem Elektromotor, insbesondere dem Kunststoffstatorgehäuse, ist ein Stecker ausgebildet und vorzugsweise ist der Stecker einteilig an dem Kunststoffstatorgehäuse ausgebildet und vorzugsweise sind die elektrischen Kontaktelemente innerhalb des Steckers angeordnet und vorzugsweise sind die elektrischen Kontaktelemente fluiddicht von dem Kunststoff des Kunststoffstatorgehäuse umspritzt und die elektrischen Kontaktelemente an dem Stecker sind von außerhalb des Kunststoffstatorgehäuses mechanisch und elektrisch von elektrischen Gegenkontaktelementen an einem Gegenstecker kontaktierbar. Der Stecker kann besonders preiswert damit hergestellt werden, da dieser einteilig am Kunststoffstatorgehäuse mit diesem beim Spritzgießen mit hergestellt werden kann. Dabei sind die elektrischen Kontaktelemente vom Kunststoff des Kunststoffstatorgehäuses fluiddicht umspritzt und ein Ende der elektrischen Kontaktelemente ist an dem Stecker von außen kontaktierbar.

In einer ergänzenden Variante ist die radiale Außenseite zur Auflage des Fadens an der Lieferrolle in einem Schnitt senkrecht zu einer Rotationsachse der Lieferrolle kreisförmig ausgebildet und/oder die Lieferrolle ist ohne ein Getriebe von dem Elektromotor angetrieben, so dass die Drehzahl des Rotors des Elektromotors der Drehzahl der Lieferrolle entspricht.

In einer weiteren Variante ist die radiale Außenseite zur Auflage des Fadens als eine Ringnut an der Lieferrolle ausgebildet und vorzugsweise ist die Ringnut zwischen zwei Friktionsscheiben ausgebildet, wobei vorzugsweise die zwei Friktionsscheiben mit einem Fixierungselement, z. B. eine Rollenmutter oder ein Stift, an dem Kunststoffrollenbauteil befestigt sind und insbesondere ist das Fixierungselement mit einem Befestigungsmittel, z. B. einer Bajonett- oder Schraubverbindung, an dem Kunststoffrollenbauteil befestigt. Der Faden wird von einer Ringnut an der Lieferrolle bewegt, d. h. der Faden liegt an der Ringnut als radiale Außenseite zur Auflage des Fadens auf und wird von der Lieferrolle im Wesentlichen ohne Schlupf gefördert. Vorzugsweise weisen die Friktionsscheiben eine Profilierung auf, so dass dadurch an der Ringnut eine Profilierung vorhanden ist und damit von der Ringnut auf den zu bewegenden Faden eine bessere Kraftübertragung möglich ist.

In einer weiteren Ausgestaltung umfasst das Fadenlieferwerk nur zwei, drei oder vier Kunststoffspritzgussteile ohne Berücksichtigung von vorzugsweise vorhandenen Friktionsscheiben, insbesondere nur drei Kunststoffspritzgussteile und zwar das Kunststoffstatorgehäuse, das Kunststoffrollenbauteil und das Fixierungselement und/oder mit dem Fadenlieferwerk ist ein in dieser Schutzrechtsanmeldung beschriebenes Verfahren ausführbar.

Zweckmäßig umfasst das Fadenlieferwerk wenigstens ein Fixierungsmittel, z. B. Gehäussstifte, Öffnungen oder Haken, zur Befestigung des Fadenlieferwerkes und vorzugsweise ist das wenigstens eine Fixierungsmittel einteilig an dem Kunststoffstatorgehäuse ausgebildet.

Erfindungsgemäßes Verfahren zur Herstellung eines Fadenlieferwerkes, insbesondere eines in dieser Schutzrechtsanmeldung beschriebenes Fadenlieferwerk, mit den Schritten: zur Verfügung stellen eines Stators mit Elektromagneten, zur Verfügung stellen eines Rotors mit Permanentmagneten, zur Verfügung stellen einer Lieferrolle, Verbinden des Stators, des Rotors und der Lieferrolle zu einem Fadenlieferwerk mit einem Elektromotor und einer Lieferrolle, wobei der Stator von einem Kunststoffstatorgehäuse, insbesondere aus thermoplastischem Kunststoff und/oder fluiddicht, umspritzt wird und sämtliche Statorkomponenten in das Werkzeug bzw. Spritzgusswerkzeug eingelegt werden und anschließend werden sämtliche Statorkomponenten abgesehen von den elektrischen Kontaktelementen, vollständig und fluiddicht mit Kunststoff umspritzt und das Kunststoffstatorgehäuse wird somit hergestellt und/oder der Rotor von der Lieferrolle gebildet wird, indem an der Lieferrolle Permanentmagnete integriert werden, insbesondere indem die Permanentmagnete an einem Kunststoffrollenbauteil aus Kunststoff der Lieferrolle mittelbar oder unmittelbar befestigt werden und/oder an dem Stator mit einem, insbesondere nur einem, Werkzeug ein, insbesondere nur ein, Kunststoffstatorgehäuse mit Spritzgießen von Kunststoff hergestellt wird und/oder an der Lieferrolle und dem Rotor ein, insbesondere nur ein, Kunststoffrollenbauteil mit einem, insbesondere nur einem, Werkzeug bzw. Spritzgusswerkezug mit Spritzgießen von Kunststoff hergestellt wird und/oder an dem Kunststoffstatorgehäuse oder dem Kunststoffrollenbauteil eine Lagerhülse umspritzt wird zur Ausbildung eines Gleitlagers zwischen dem Kunststoffstatorgehäuse und dem Kunststoffrollenbauteil.

In einer zusätzlichen Ausgestaltung wird wenigstens eine Rotorkomponente, insbesondere sämtliche Rotorkomponenten, in das Werkzeug bzw. Spritzgusswerkzeug eingelegt und anschließend wird die wenigsten eine Rotorkomponente, insbesondere sämtliche Rotorkomponenten, mit Kunststoff umspritzt und das Kunststoffrollenbauteil somit hergestellt. Zweckmäßig ist der Elektromotor kein Schrittmotor.

Im Nachfolgenden wird ein Ausführungsbeispiel der Erfindung unter Bezugnahme auf die beigefügte Zeichnung näher beschrieben.

Es zeigt:
- Fig. 1: eine erste perspektivische Ansicht eines Fadenlieferwerkes,
- Fig. 2: eine zweite perspektivische Ansicht des Fadenlieferwerkes,
- Fig. 3: eine Rückansicht des Fadenlieferwerkes,
- Fig. 4: eine Explosionsdarstellung des Fadenlieferwerkes,
- Fig. 5: einen Längsschnitt des Fadenlieferwerkes und
- Fig. 6: eine perspektivische Ansicht eines Stators ohne Kunststoffstatorgehäuse und der Permanentmagnete des Rotors mit einem Magnetträger.

Ein Fadenlieferwerk 1 dient als Fadenzubringer für Textilmaschinen, z. B. Strick- oder Webmaschinen (nicht dargestellt). Dabei wird von dem Fadenlieferwerk 1 ein Faden von einer Rolle bzw. Fadenrolle abgewickelt, und anschließend der Textilmaschine zugeführt (nicht dargestellt). Zwischen dem Fadenlieferwerk 1 und der Textilmaschine ist im Allgemeinen noch eine spezielle Zuführvorrichtung angeordnet. Das Fadenlieferwerk 1 bzw. die Fadenliefervorrichtung 1 wickelt dabei von der Rolle den Faden in derjenigen Geschwindigkeit ab, in der die Textilmaschine den Faden zur Verarbeitung benötigt. Die von dem Fadenlieferwerk 1 pro Zeiteinheit abgewickelte Fadenlänge von der Rolle und die von dem Fadenlieferwerk pro Zeiteinheit der Textilmaschine zugeführte Länge entspricht somit der von der Textilmaschine durchschnittlich pro Zeiteinheit benötigten Fadenlänge.

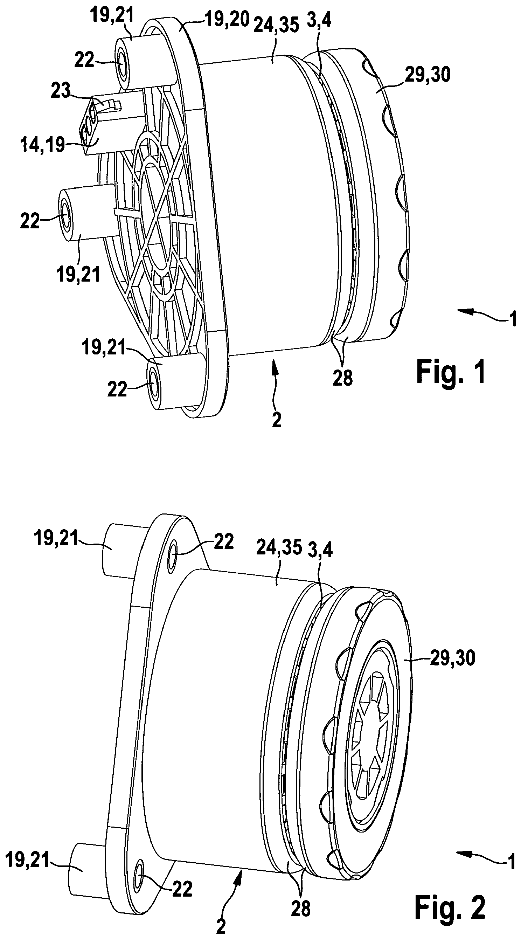

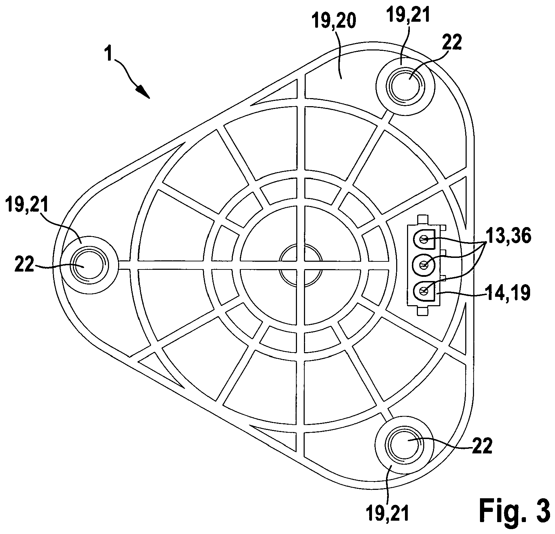

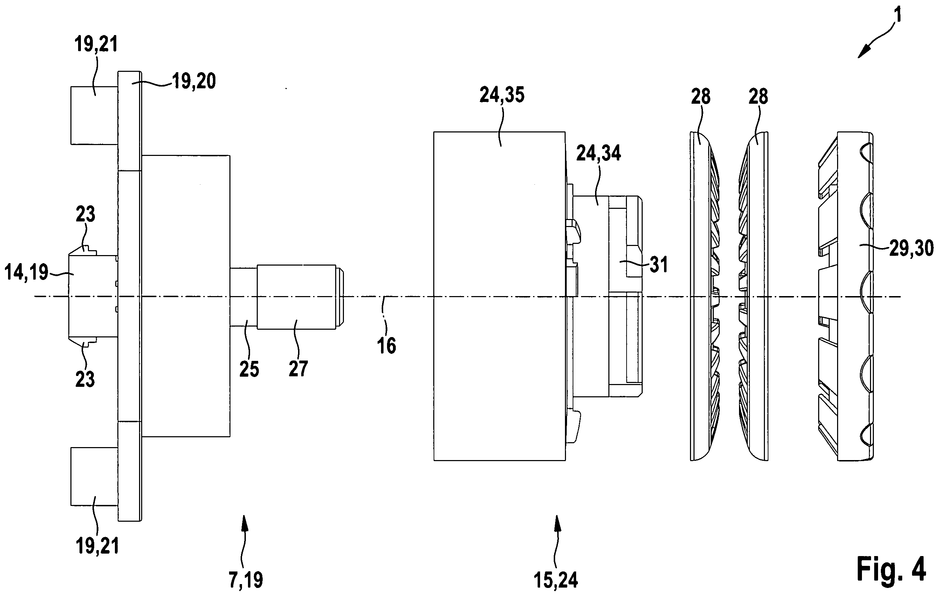

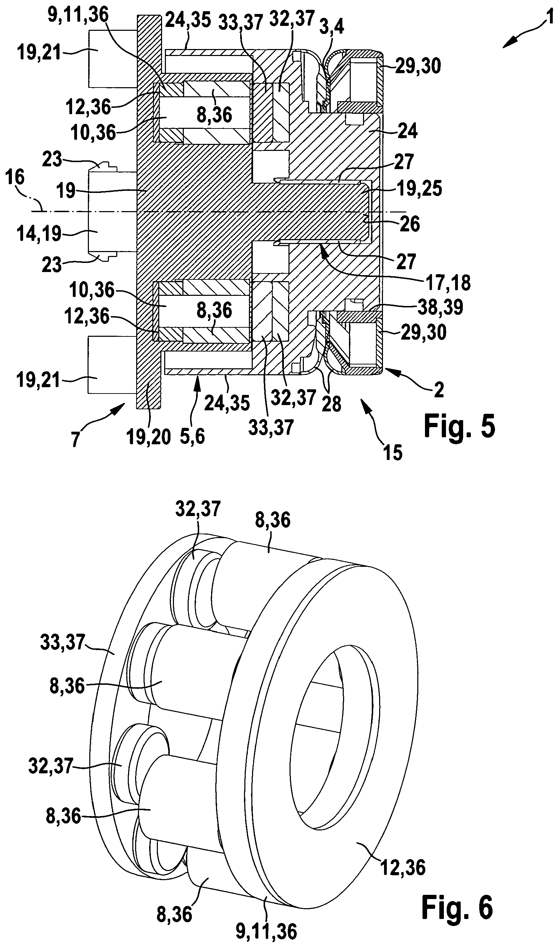

Das Fadenlieferwerk 1 umfasst eine Lieferrolle 2 und einen Elektromotor 5 (Fig. 5). Der Elektromotor 5 ist ein bürstenloser, elektronisch kummutierter Gleichstromelektromotor 6 mit einem Stator 7 und einem Rotor 15. Der Stator 7 weist sechs Spulen 8 bzw. Elektromagnete 8 (Fig. 5 und 6) auf. Innerhalb der Spulen 8 sind Eisenkernstifte 10 angeordnet und ein Rückschlussring 11 steht in magnetisch leitender Verbindung mit den Eisenkernstiften 10 und dient zugleich auch als Spulenträger 9 für die Spulen 8. Hierzu weist der Rückschlussring 11 Öffnungen auf, innerhalb denen die Eisenkernstifte 10 angeordnet sind und dadurch ein mechanischer Kontakt zwischen den Eisenkernstiften 10 und dem Rückschlussring 11 aus Eisen besteht. Der Rückschlussring 11 dient dazu, das von den Spulen 8 erzeugte Magnetfeld zu verstärken. Auf dem rückseitigen Ende des Rückschlussringes 11 liegt eine Leiterplatine 12 (Fig. 5 und 6) auf, so dass in Fig. 6 die Eisenkernstifte 10 nicht sichtbar sind, weil die Eisenkernstifte 10 von der Leiterplatine 12 abgedeckt sind. Die Leiterplatine 12 ist ein Kunststoffring auf dem entsprechend nicht dargestellte Leiterbahnen angeordnet sind. Diese Leiterbahnen sind dabei mit elektrischen Kontaktelementen 13 (nicht in Fig. 6 dargestellt) und Drähten in den Spulen 8 verbunden und mit Hilfe der elektrischen Kontaktelementen 13, die mit den Leiterbahnen auf der Leiterplatine 12 verlötet sind, können die Spulen 8 bestromt werden. Dabei werden von einer nicht dargestellten Leistungselektronik jeweils zwei der sechs Spulen 8 abwechselnd entsprechend der Stellung des Rotors 15 bestromt. Die Stellung des Rotors 15 wird von einem nicht dargestellten Sensor erfasst. Die Statorkomponenten 36, nämlich die Spulen 8, der Spulenträger 9 bzw. Rückschlussring 11, die Eisenkernstifte 10 und die Leiterplatine 12 sowie teilweise auch die elektrischen Kontaktelemente 13 sind dabei vollständig und fluiddicht von einem Kunststoffstatorgehäuse 19 aus thermoplastischem Kunststoff umspritzt. Die Statorkomponenten 36 sind dabei beim Spritzgießen zunächst in das Spritzgusswerkzeug einzulegen und werden anschließend vom Kunststoff umspritzt. Dadurch kann der Stator 7 besonders einfach hergestellt werden und es ist außerdem für einen zuverlässigen Betrieb des Fadenlieferwerkes 1 auch eine fluiddichte Abdichtung des Stators 7 gewährleistet, so dass das Fadenlieferwerk 1 beispielsweise prall- und druckwassergeschützt sowie auch staubdicht ist. Beim Spritzgießen des Kunststoffstatorgehäuses 19 werden aufgrund der Geometrie des Spritzgusswerkzeuges für die Herstellung des Kunststoffstatorgehäuses 19 einteilig an dem Kunststoffstatorgehäuse 19 eine Gehäuseplatte 20 mit Gehäusestiften 21, ein Stecker 14 und ein Lagestutzen 25 mit hergestellt. Der Lagerstutzen 25 ist außerdem radial außenseitig mit einer Lagerhülse 27 aus einem für die Gleitlagerung 18 geeignetem Material, z. B. PTFE, POM oder Rotguss, versehen (Fig. 4). Die Lagerhülse 27 wird ebenfalls vor dem Spritzgießen in das Werkzeug zur Herstellung des Kunststoffstatorgehäuses 19 eingebracht und anschließend vom thermoplastischen Kunststoff teilweise umspritzt und dadurch stoffschlüssig mit dem Lagerstutzen 25 verbunden. Die Gehäuseplatte 20 weist rückseitig (Fig. 1) Rippen als mechanische Versteifungselemente auf und an der Rückseite der Gehäuseplatte 20 sind auch die drei Gehäusestifte 21 vorhanden. Die Gehäusestifte 21 weisen Befestigungsbohrungen 22 auf und in diese Befestigungsbohrungen 22 können Schrauben eingeschraubt werden zur Befestigung des Fadenlieferwerkes 1 beispielsweise an einer Rahmenkonstruktion (nicht dargestellt). Abweichend hiervon können in die Gehäusestifte 21 Gewindehülsen (nicht dargestellt) eingespritzt sein. Die nicht dargestellten Gewindehülsen weisen ein Innengewinde auf, in welche die Schrauben eingeschraubt werden können. Die Gehäusestifte 21, mit oder ohne Gewindehülsen, stellen somit ein Fixierungsmittel zur Befestigung des Fadenlieferwerkes 1 dar. Der ebenfalls einstückig ausgebildete Stecker 14 weist drei Öffnungen auf, innerhalb denen die elektrischen Kontaktelemente 13 (Fig. 3) von außen kontaktiert werden können. Der Stecker 14 ist ferner mit Rastelementen 23 versehen, in denen entsprechende Gegenrastelemente an einem nicht dargestellten Gegenstecker einrasten. Dadurch kann in einfacher Weise an dem Stecker 14 ein nicht dargestellter Gegenstecker mit elektrischen Gegenkontaktelementen befestigt werden und die elektrischen Gegenkontaktelemente an dem Gegenstecker stehen in mechanischem und elektrischem Kontakt mit den elektrischen Kontaktelementen 13. Die Leistungselektronik zur Steuerung und/oder Regelung des Elektromotors 5 ist in diesem Ausführungsbeispiel nicht an dem Fadenlieferwerk 1 angeordnet, sondern außerhalb des Fadenlieferwerkes 1. Abweichend hiervon kann die Leistungselektronik auch in das Fadenlieferwerk 1 eingebaut oder integriert sein (nicht dargestellt).

Die Lieferrolle 2 zum Fördern bzw. Liefern des Fadens umfasst ein ebenfalls mittels Spritzgießen hergestelltes Kunststoffrollenbauteil 24. Das Kunststoffrollenbauteil 24 weist eine Lagerbohrung 26 auf und die Lagerbohrung 26 wird beim Spritzgießen des Kunststoffrollenbauteils 24 aufgrund der Geometrie des Spritzgusswerkzeuges zur Herstellung des Kunststoffrollenbauteils 24 mit hergestellt. Der Lagerstutzen 25 des Kunststoffstatorgehäuses 19 ist dabei innerhalb dieser Lagerbohrung 26 koaxial angeordnet, so dass mittels des Lagerstutzens 25 sowie der Lagerhülse 27 das Kunststoffrollenbauteil 24 koaxial an dem Lagerstutzen 25 gelagert ist mittels einer als Gleitlagerung 18 ausgebildeten Lagerung 17. Die Lieferrolle 2 und damit auf das Kunststoffrollenbauteil 24 führen somit eine Rotationsbewegung um eine Rotationsachse 16 aus. In das Kunststoffrollenbauteil 24 sind sechs Permanentmagnete 32 und ein ringförmiger Magnetträger 33 als Rotorkomponenten 37 integriert. Dabei werden bei der Herstellung des Kunststoffrollenbauteils 24 der Magnetträger 33 vor dem Spritzgießen mit dem Spritzgusswerkzeug zur Herstellung des Kunststoffrollenbauteiles 24 eingelegt und anschließend vom thermoplastischen Kunststoff umspritzt. Nach dem Spritzgießen werden die Permanentmagnete 32 an dem Kunststoffrollenbauteil 24 mechanisch befestigt. Dadurch können die Permanentmagnete 32 und der Magnetträger 33 besonders preiswert an dem Kunststoffrollenbauteil 24 mit angeordnet bzw. integriert werden. Die Lieferrolle 2 bildet damit auch den Rotor 15 des Elektromotors 5, weil die Permanentmagnete 32 an dem Kunststoffrollenbauteil 24 als Bestandteil der Lieferrolle 2 befestigt sind.

Beim Spritzgießen des Kunststoffrollenbauteils 24 werden einteilig an diesem ein Trägerstutzen 34 und eine Rollenhülse 35 mit hergestellt. Die Rollenhülse 35 umschließt radial teilweise den Stator 7 des Elektromotors 5 (Fig. 5) und an dem Trägerstutzen 34 ist eine Bajonettgeometrie 31 ausgebildet (Fig. 4). An dem Kunststoffrollenbauteil 24 sind zur Ausbildung der Lieferrolle 2 zwei Friktionsscheiben 28 mittels eines als Rollenmutter 30 ausgebildeten Fixierungselementes 29 befestigt. Die beiden Friktionsscheiben 28 sind ringförmig und können aufgrund ihrer Öffnung auf den Trägerstutzen 34 aufgeschoben werden. Nach dem Aufschieben der beiden Friktionsscheiben 28 wird eine ebenfalls ringförmige Rollenmutter 30 mittels der Bajonettgeometrie 31 auf dem Trägerstutzen 34 befestigt. Dadurch bildet sich zwischen den beiden Friktionsscheiben 28 eine Ringnut 4 als radiale Außenseite 3 zur Auflage des Fadens. Die Bajonettgeometrie 31 kann dabei ebenfalls beim Spritzgießen des Kunststoffrollenbauteiles 24 mit hergestellt werden. Die Rollenmutter 30 wird ebenfalls mittels Spritzgießen aus Kunststoff hergestellt. Die Friktionsscheiben 28 bestehen beispielsweise aus Metall, insbesondere Stahl. Die Lieferrolle 2 wird somit von dem Kunststoffrollenbauteil 24, den beiden Friktionsscheiben 28 und der Rollenmutter 30 gebildet. Die Rollenmutter 30 ist mit einer Bajonettverbindung 39 als Befestigungsmittel 38 an dem Kunststoffrollenbauteil 24, d. h. dem Trägerstutzen 34, befestigt.

Insgesamt betrachtet sind mit dem erfindungsgemäßen Fadenlieferwerk 1 wesentliche Vorteile verbunden. Bei der Herstellung des Fadenlieferwerkes 1 sind nur drei Kunststoffbauteile, die mittels Spritzgießen aus Kunststoff besonders preiswert hergestellt werden, erforderlich. Dies sind das Kunststoffstatorgehäuse 19, das Kunststoffrollenbauteil 24 und die Rollenmutter 30. Das Kunststoffstatorgehäuse 19 hat zahlreiche Funktionen, z. B. sind hieran preiswert der Lagerstutzen 25, die Gehäusestifte 21 und der Stecker 14 mittels Spritzgießen hergestellt. Dadurch kann der Stator 7 besonders einfach hergestellt werden und das Kunststoffstatorgehäuse 19 stellt zusätzliche Funktionen wie beispielsweise den Lagerstutzen 25 und den Stecker 14 zur Verfügung. In analoger Weise hat auch das Kunststoffrollenbauteil 24 diesen Vorteil, weil in diesem, neben der Ausbildung des Trägerstutzens 34 zur Befestigung der Friktionsscheiben 28, auch die Permanentmagnete 32 mit integriert sind, so dass das Kunststoffrollenbauteil 24 und damit die Lieferrolle 2 auch den Rotor 15 des Elektromotors 5 bildet. Das Fadenlieferwerk 1 kann dadurch besonders preiswert hergestellt werden und weist einen kompakten Aufbau auf. Auch die Leiterplatine 12 spart bei der Herstellung des Fadenlieferwerkes 1 Kosten, weil eine aufwendige Verdrahtung der Spulen 8 nicht erforderlich ist.

## Patentansprüche

1. Fadenlieferwerk (1) als Fadenzubringer für Textilmaschinen, z. B. Strick- oder Webmaschinen, umfassend
- eine Lieferrolle (2) zum Fördern des Fadens mit einer radialen Außenseite (3) zur Auflage des Fadens,
- einen Elektromotor (5) mit einem Stator (7) und einem Rotor (15), so dass mittels einer Rotationsbewegung des Rotors (15) aufgrund einer mechanischen Verbindung zwischen dem Rotor (15) und der Lieferrolle (2) die Lieferrolle (2) in eine Rotationsbewegung bringbar ist,
- eine Lagerung (17) für die Lieferrolle (2) und den Rotor (15),
**dadurch gekennzeichnet, dass**
der Stator (7) fluiddicht von einem Kunststoffstatorgehäuse (19) eingeschlossen ist und sämtliche Statorkomponenten (36), abgesehen von den elektrischen Kontaktelementen (13), vollständig und fluiddicht vom Kunststoff des Kunststoffstatorgehäuses (19) eingeschlossen , insbesondere umspritzt, sind.

2. Fadenlieferwerk nach Anspruch 1,
**dadurch gekennzeichnet, dass**
der Rotor (15) von der Lieferrolle (2) gebildet ist, indem in die Lieferrolle (2) Magnete (32), insbesondere Permanentmagnete (32), integriert sind.

3. Fadenlieferwerk nach Anspruch 1 oder 2,
**dadurch gekennzeichnet, dass**
die Lieferrolle (2) ein, insbesondere nur ein, Kunststoffrollenbauteil (24) aus Kunststoff umfasst und vorzugsweise in dem Kunststoffrollenbauteil (24) die Magnete (32) eingeschlossen angeordnet sind.

4. Fadenlieferwerk nach einem oder mehreren der vorhergehenden Ansprüche,
**dadurch gekennzeichnet, dass**
die Lagerung (17), insbesondere nur eine Lagerung (17), an dem Kunststoffstatorgehäuse (19) ausgebildet ist.

5. Fadenlieferwerk nach einem oder mehreren der vorhergehenden Ansprüche,
**dadurch gekennzeichnet, dass**
die Statorkomponenten (36) Elektromagnete (8), ein Spulenträger (9), Eisenkernstifte (10), ein Rückschlussring (11), eine Leiterplatine (12) und elektrische Kontaktelemente (13) sind.

6. Fadenlieferwerk nach einem oder mehreren der vorhergehenden Ansprüche,
**dadurch gekennzeichnet, dass**
der Stator (7) Elektromagnete (8) mit Spulen (8) umfasst und vorzugsweise innerhalb der Spulen (8) Eisenkernstifte (10) angeordnet sind.

7. Fadenlieferwerk nach Anspruch 6,
**dadurch gekennzeichnet, dass**
der Stator (7) einen Rückschlussring (11) aus Eisen umfasst der in magnetisch leitender Verbindung mit den Eisenkernstiften (10) steht.

8. Fadenlieferwerk nach einem oder mehreren der vorhergehenden Ansprüche 6 oder 7, **dadurch gekennzeichnet, dass** der Elektromotor (5) eine Leiterplatine (12) zur Bestromung der Elektromagnete (8) umfasst und vorzugsweise eine von der Leiterplatine (12) aufgespannte fiktive Ebene im Wesentlichen senkrecht zu der Rotationsachse (16) des Rotors (15) ausgerichtet ist.

9. Fadenlieferwerk nach Anspruch 8,
**dadurch gekennzeichnet, dass**
die Leiterplatine (12) elektrische Kontaktelemente (13) umfasst zur Bestromung der Elektromagnete (8) mit durch die elektrischen Kontaktelemente (13) geleiteten Strom.

10. Fadenlieferwerk nach einem oder mehreren der vorhergehenden Ansprüche,
**dadurch gekennzeichnet, dass**
das Fadenlieferwerk (1) eine Leistungselektronik umfasst zur Steuerung und/oder Regelung der Drehzahl des Rotors (15) und/oder der elektrischen Leistung des Elektromotors (5).

11. Fadenlieferwerk nach einem oder mehreren der vorhergehenden Ansprüche 3 bis 10, **dadurch gekennzeichnet, dass** die Lagerung (17), insbesondere nur eine Lagerung (17), an dem Kunststoffrollenbauteil (24) ausgebildet ist.

12. Verfahren zur Herstellung eines Fadenlieferwerkes (1), insbesondere eines Fadenlieferwerkes (1) gemäß einem oder mehrerer der vorhergehenden Ansprüche, mit den Schritten:
- zur Verfügung stellen eines Stators (7) mit Elektromagneten (8),
- zur Verfügung stellen eines Rotors (15) mit Permanentmagneten (32),
- zur Verfügung stellen einer Lieferrolle (2),
- Verbinden des Stators (7), des Rotors (15) und der Lieferrolle (2) zu dem Fadenlieferwerk (1) mit einem Elektromotor (5) und der Lieferrolle (2),
**dadurch gekennzeichnet, dass**
der Stator (7) von einem Kunststoffstatorgehäuse (19) fluiddicht umspritzt wird und sämtliche Statorkomponenten (36) in das Werkzeug bzw. Spritzgusswerkzeug eingelegt werden und anschließend werden sämtliche Statorkomponenten (36), abgesehen von den elektrischen Kontaktelementen (13), vollständig und fluiddicht mit Kunststoff umspritzt und das Kunststoffstatorgehäuse (19) somit hergestellt wird.

13. Verfahren nach Anspruch 12,
**dadurch gekennzeichnet, dass**
der Stator (7) von einem Kunststoffstatorgehäuse (19) aus thermoplastischem Kunststoff fluiddicht umspritzt wird.

14. Verfahren nach Anspruch 12 oder 13,
**dadurch gekennzeichnet, dass**
an dem Stator (7) mit einem, insbesondere nur einem, Werkzeug ein, insbesondere nur ein, Kunststoffstatorgehäuse (19) mit Spritzgießen von Kunststoff hergestellt wird.

15. Verfahren nach einem oder mehreren der Ansprüche 12 bis 14,
**dadurch gekennzeichnet, dass**
der Rotor (15) von der Lieferrolle (2) gebildet wird, indem an der Lieferrolle (2) Permanentmagnete (32) integriert werden, insbesondere indem die Permanentmagnete (32) an einem Kunststoffrollenbauteil (24) aus Kunststoff der Lieferroller (2) befestigt werden, und vorzugsweise an dem Kunststoffstatorgehäuse (19) oder dem Kunststoffrollenbauteil (24) eine Lagerhülse (27) umspritzt wird zur Ausbildung eines Gleitlagers (18) zwischen dem Kunststoffstatorgehäuse (19) und dem Kunststoffrollenbauteil (24).

## Claims

1. Thread supplier (1) as a thread feed for textile machines, for example knitting machines or weaving machines, comprising
- a feed roller (2) for the supply of the thread with a radial outside (3) for the contact with the thread,
- an electric motor (5) with a stator (7) and a rotor (15), so that by means of a rotational movement of the rotor (15) and because of a mechanical connection between the rotor (15) and the feed roller (2) the feed roller (2) can be brought in a rotational movement,
- a bearing (17) for the feed roller (2) and the rotor (15),
**characterized in that**
the stator (7) is enclosed in a fluid-tight manner by a plastic stator housing (19) and all stator components (36), apart from the electrical contact elements (13), are completely and fluid-tightly enclosed, in particular enclosed by molding, with the plastic of the plastic stator housing (19).

2. Thread supplier according to claim 1,
**characterized in that**
the rotor (15) is formed by the feed roller (2) by integrating magnets (32), in particular permanent magnets (32), into the feed roller (2).

3. Thread supplier according to claim 1 or 2,
**characterized in that**
the feed roller (2) comprises one, in particular only one, plastic roller component (24) made of plastic and preferably the magnets (32) are arranged in an enclosed manner in the plastic roller component (24).

4. Thread supplier according to one or more of the preceding claims,
**characterized in that**
the bearing (17), in particular only one bearing (17), is formed on the plastic stator housing (19).

5. Thread supplier according to one or more of the preceding claims,
**characterized in that**
the stator components (36) are electromagnets (8), a coil carrier (9), iron core pins (10), a return ring (11), a circuit board (12) and electrical contact elements (13).

6. Thread supplier according to one or more of the preceding claims,
**characterized in that**
the stator (7) comprises electromagnets (8) with coils (8) and preferably iron core pins (10) are arranged within the coils (8).

7. Thread supplier according to claim 6,
**characterized in that**
the stator (7) comprises a return ring (11) made of iron, which is in magnetically conductive connection with the iron core pins (10).

8. Thread supplier according to one or more of the preceding claims 6 or 7,
**characterized in that**
the electric motor (5) comprises a circuit board (12) for energizing the electromagnets (8) and preferably a fictive plane, which is defined respectively derived by the circuit board (12), is oriented substantially perpendicular to the rotational axis (16) of the rotor (15).

9. Thread supplier according to claim 8,
**characterized in that**
the circuit board (12) comprises electrical contact elements (13) for energizing the electromagnets (8) with current conducted through the electrical contact elements (13).

10. Thread supplier according to one or more of the preceding claims,
**characterized in that**
the thread supplier (1) comprises a power electronics unit for controlling and/or regulating the rotational speed of the rotor (16) and/or the electric power of the electric motor (5).

11. Thread supplier according to one or more of the preceding claims 3 to 10,
**characterized in that**
the bearing (17), in particular only one bearing (17), is formed on the plastic roller component (24).

12. Method for the production of a thread supplier (1), in particular a thread suppliers (1) according to one or more of the preceding claims, with the steps:
- providing a stator (7) with electromagnets (8),
- providing a rotor (15) with permanent magnets (32),
- providing a feed roller (2),
- connecting the stator (7), the rotor (15) and the feed roller (2) to the thread supplier (1) with an electric motor (5) and the feed roller (2),
**characterized in that**
the stator (7) is enclosed in a fluid-tight manner by molding with a plastic stator housing (19) and all stator components (36) are inserted into the tool or injection molding tool and subsequently all stator components (36), apart from the electrical contact elements (13), are completely and fluid-tightly molded with plastic and the plastic stator housing (19) is thus produced.

13. Method according to claim 12,
**characterized in that**
the stator (7) is enclosed in a fluid-tight manner by molding with a plastic stator housing (19) made of thermoplastic.

14. Method according to claim 12 or 13,
**characterized in that**
at the stator (7) with one, in particular only one, tool one, in particular only one, plastic stator housing (19) is produced with injection molding of plastic.

15. Method according to one or more of the claim 12 to 14,
**characterized in that**
the rotor (15) is formed by the feed roller (2) by integrating permanent magnets (32) into the feed roller (2), in particular by attaching the permanent magnets (32) to a plastic roller component (24) made of plastic of the feed roller (2), and preferably on the plastic stator housing (19) or the plastic roller component (24) a bearing bushing (27) is enclosed by molding for the arrangement of a sliding bearing (18) between the plastic stator housing (19) and the plastic roller component (24).

## Revendications

1. Dispositif d'alimentation de fil (1) en tant que fournisseur de fil pour des machines textiles, par ex. des machines à tricoter ou des métiers à tisser, comprenant :
- un rouleau d'alimentation (2) pour le transport du fil, avec une face extérieure (3) radiale pour le support du fil,
- un moteur électrique (5) avec un stator (7) et un rotor (15), de sorte qu'à l'aide d'un déplacement en rotation du rotor (15), du fait d'une liaison mécanique entre le rotor (15) et le rouleau d'alimentation (2), le rouleau d'alimentation (2) puisse être amené dans un déplacement en rotation,
- un logement (17) pour le rouleau d'alimentation (2) et le rotor (15),
**caractérisé en ce que**
le stator (7) est entouré de manière étanche aux fluides par un carter de stator (19) en matière plastique et tous les composants (36) du stator, à l'exception des éléments de contact (13) électriques, sont entourés complètement et de manière étanche aux fluides, notamment couverts par extrusion par de la matière plastique du carter de stator (19) en matière plastique.

2. Dispositif d'alimentation de fil selon la revendication 1,
**caractérisé en ce que** le rotor (15) est formé par le rouleau d'alimentation (2), **en ce que** dans le rouleau d'alimentation (2) sont intégrés des aimants (32), notamment des aimants permanents (32).

3. Dispositif d'alimentation de fil selon la revendication 1 ou la revendication 2,
**caractérisé en ce que** le rouleau d'alimentation (2) ne comprend notamment qu'un seul composant (24) de rouleau en matière plastique en matière plastique et de préférence les aimants (32) sont enfermés dans le composant (24) de rouleau en matière plastique.

4. Dispositif d'alimentation de fil selon l'une quelconque ou plusieurs des revendications précédentes,
**caractérisé en ce que** le logement (17), notamment un seul logement (17) est conçu sur le carter de stator (19) en matière plastique.

5. Dispositif d'alimentation de fil selon l'une quelconque ou plusieurs des revendications précédentes,
**caractérisé en ce que** les composants (36) de stator sont des électroaimants (8), un support de bobine (9), des tiges de noyau de fer (10), une bague de reflux (11), une carte de circuits imprimés (12) et des éléments de contact (13) électriques.

6. Dispositif d'alimentation de fil selon l'une quelconque ou plusieurs des revendications précédentes,
**caractérisé en ce que** le stator (7) comprend des électroaimants (8) avec des bobines (8) et de préférence des tiges de noyau de fer (10) sont placées à l'intérieur des bobines (8).

7. Dispositif d'alimentation de fil selon la revendication 6,
**caractérisé en ce que** le stator (7) comprend une bague de reflux (11) en fer qui est en liaison conductrice magnétique avec les tiges de noyau de fer (10).

8. Dispositif d'alimentation de fil selon l'une quelconque ou plusieurs des revendications précédentes 6 à 7,
**caractérisé en ce que** le moteur électrique (5) comporte une carte de circuits imprimés (12) pour l'alimentation électrique des électroaimants (8) et de préférence un plan fictif dressé par la carte de circuits imprimés (12) est orienté sensiblement à la perpendiculaire de l'axe de rotation (16) du rotor (15).

9. Dispositif d'alimentation de fil selon la revendication 8, **caractérisé en ce que** la carte de circuits imprimés (12) comprend des éléments de contact (13) électriques pour l'alimentation électrique des électroaimants (8) avec du courant conduit à travers les éléments de contact (13) électriques.

10. Dispositif d'alimentation de fil selon l'une quelconque ou plusieurs des revendications précédentes,
**caractérisé en ce que** le dispositif d'alimentation de fil (1) comprend une électronique de puissance pour commander et/ou régler la vitesse de rotation du rotor (15) et/ou la puissance électrique du moteur électrique (5).

11. Dispositif d'alimentation de fil selon l'une quelconque ou plusieurs des revendications précédentes 3 à 10,
**caractérisé en ce que** le logement (17), notamment un seul logement (17) est conçu sur le composant (24) de rouleau en matière plastique.

12. Procédé destiné à fabriquer un dispositif d'alimentation de fil (1), notamment un dispositif d'alimentation de fil (1) selon l'une quelconque ou plusieurs des revendications précédentes, avec les étapes :
- de la mise à disposition d'un stator (7) avec des électroaimants (8),
- de la mise à disposition d'un rotor (15) avec des aimants permanents (32),
- de la mise à disposition d'un rouleau d'alimentation (2),
- de la liaison du stator (7), du rotor (15) et du rouleau d'alimentation (2) pour obtenir le dispositif d'alimentation du fil (1) avec un moteur électrique (5) et le rouleau d'alimentation (2),
**caractérisé en ce**
**qu'**on couvre par extrusion, de manière étanche aux fluides, le stator (7) d'un carter de stator (19) en matière plastique et on insère tous les composants (36) du stator dans l'outil ou dans l'outil de moulage par injection et ensuite, on couvre complètement par extrusion tous les composants (36) du stator, à l'exception des éléments de contact (13) électriques de manière étanche aux fluides avec de la matière plastique et on fabrique ainsi le carter de stator (19) en matière plastique.

13. Procédé selon la revendication 12,
**caractérisé en ce qu'**on couvre par extrusion de manière étanche aux fluides le stator (7) avec un carter de stator (19) en matière thermoplastique.

14. Procédé selon la revendication 12 ou la revendication 13,
**caractérisé en ce que** sur le stator (7), on fabrique avec un, notamment un seul outil, un, notamment un seul carter de stator (19) en matière plastique par moulage par injection de matière plastique.

15. Procédé selon l'une quelconque ou plusieurs des revendications 12 à 14,
**caractérisé en ce que** le rotor (15) est formé par le rouleau d'alimentation (2), notamment **en ce que** sur le rouleau d'alimentation (2), on intègre des aimants permanents (32), notamment **en ce qu'**on fixe les aimants permanents (32) sur un composant de rouleau (24) en matière plastique en matière plastique du rouleau d'alimentation (2) et de préférence, on couvre par extrusion le carter de stator (19) en matière plastique ou le composant (24) de rouleau en matière plastique d'une douille de logement (27) pour créer un palier lisse (18) entre le carter de stator (19) en matière plastique et le composant de rouleau (24) en matière plastique.
